(19) Europäisches Patentamt
European Patent Office
Office européen des brevets

(11) Numéro de publication: **0 486 374 B1**

# (12) FASCICULE DE BREVET EUROPEEN

(45) Date de publication de fascicule du brevet: **19.04.95**

(51) Int. Cl.$^6$: **C08L 57/04**, C08L 71/02, C08K 5/17

(21) Numéro de dépôt: **91403011.9**

(22) Date de dépôt: **08.11.91**

## (54) Dispersions aqueuses à base de polymères contenant des groupes acide carboxyliques.

(30) Priorité: **15.11.90 FR 9014197**

(43) Date de publication de la demande:
**20.05.92 Bulletin 92/21**

(45) Mention de la délivrance du brevet:
**19.04.95 Bulletin 95/16**

(84) Etats contractants désignés:
**AT BE CH DE ES FR GB IT LI NL SE**

(56) Documents cités:
**EP-A- 0 058 382**
**FR-A- 2 447 956**

**WORLD PATENTS INDEX LATEST Derwent Publications Ltd., London, GB; AN 84-240043 & JP-A-59 142 242**

(73) Titulaire: **RHONE-POULENC CHIMIE**
**25, Ouai Paul Doumer**
**F-92408 Courbevoie Cédex (FR)**

(72) Inventeur: **Charmot, Dominique**
**18, rue Mathis**
**F-75019 Paris (FR)**
Inventeur: **Reeb, Roland**
**2, allée des Pléiades**
**F-77410 Gressy (FR)**

(74) Mandataire: **Seugnet, Jean Louis et al**
**RHONE-POULENC CHIMIE,**
**Direction de la Propriété Industrielle,**
**25, Ouai Paul Doumer**
**F-92408 Courbevoie Cédex (FR)**



Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

## Description

La présente invention concerne des dispersions aqueuses de polymères filmogènes à base de monomères éthyléniques insaturés.

Elle a plus particulièrement pour objet des latex de polymères acryliques ou vinyliques modifiés par une polyoxyalkylèneamine portant, par molécule, au moins une fonction amine primaire et/ou secondaire.

L'invention concerne également les compositions aqueuses de revêtement contenant ces dispersions.

Les dispersions aqueuses de polymères d'addition à base de monomères éthyléniques insaturés sont utilisées couramment comme liants de charges et pigments que l'on désire fixer sur un support dans des applications variées telles que peintures, adhésifs, revêtements d'étancheification et d'imperméabilisation, couchage du papier etc...

Dans ces applications, l'efficacité de la dispersion pour la formation d'un film résistant après revêtement d'une surface dépend de la température de transition vitreuse Tg du polymère dispersé ainsi que de la température minimale de formation de film TMFF de la dispersion qui conditionne l'aptitude des particules à coalescer.

De manière générale, il est désirable que la TMFF soit inférieure à la température ambiante et la plus basse possible. Cependant, il est généralement admis que les résines dites "molles" de basse Tg conduisent à des revêtements de résistance à l'usure et à la salissure inférieure à celle des résines dites "dures".

Un moyen classique pour abaisser la TMFF d'un polymère relativement dur consiste à ajouter dans la composition de revêtement un plastifiant inerte du type phtalate ou polyalkylèneglycol et/ou un agent de coalescence. Ces additifs ne donnent pas entière satisfaction et, dans le cas des agents de coalescence qui sont des substances volatiles, ils ont l'inconvénient majeur de poser des problèmes d'environnement et de pollution atmosphérique.

Un autre moyen pour obtenir des latex ayant une TMFF basse avec des monomères formant un polymère "dur" consiste à incorporer dans la chaine polymère des unités monomères hydrophiles comportant des fonctions hydroxyles, amine, acetate, ou acide carboxylique. Cependant, le film obtenu présente souvent une très forte sensibilité à l'eau et une mauvaise résistance à l'abrasion notamment en milieu humide.

Le but de l'invention est d'obtenir des dispersions aqueuses stables de polymères utilisables comme liants de charges ayant une bonne aptitude à la filmification à basse température et conduisant à des revêtements de propriétés améliorées notamment au regard de la résistance à l'abrasion et à la salissure.

Un autre but est de fournir des compositions de revêtement qui ne nécessitent que peu ou pas d'agent de coalescence ou composés organiques de faible poids moléculaire.

Les dispersions aqueuses de polymères à base de monomères éthylèniques insaturés selon l'invention sont caractérisées en ce que le polymère renferme des unités monomères contenant des groupes acide carboxylique et en ce qu'elles contiennent une polyoxyalkyleneamine comportant par molécule au moins une fonction ami ne primaire et/ou secondaire.

On a déja proposé d'incorporer des polyoxyalkylènepolyamines dans des compositions comprenant des polymères acryliques contenant un groupe époxy (EP-A-172460). La polyamine est utilisée pour un but de réticulation qui est différent de l'objet de la présente invention.

Les polyoxyalkyleneamines utilisées selon l'invention sont des produits connus, constitués d'enchainements polyéther $\{O\text{-}CH(R)\text{-}CH_2\}$ où R est un atome d'hydrogène ou un radical alkyl ayant de 1 à 6 atomes de carbone, et contenant une ou plusieurs fonctions amine primaire et/ou secondaire fixées à l'extrémité de la chaine et/ou le long de la chaine polymère. Le tronc polyéther est de préférence un polymère d'oxyde de propylène ou un copolymère oxyde d'éthylène -oxyde de propylène avec un rapport molaire OP/OE supérieur à 1.

En plus des fonctions amine primaire, ces polyoxyalkylènamines peuvent donc comporter en outre dans la molécule des amines secondaires. Toutefois, les monoamines, diamines et triamines primaires sont préférées. La masse moléculaire de ces polymères peut être comprise entre environ 140 et 10.000, et est plus favorablement située dans l'intervalle 400 à 4000 environ.

Un groupe utile de polyoxyalkylènemonoamines peut être représenté par la formule structurelle

$$R''\text{-}(CH_2\,CH(R)O)_n\text{-}(CH_2CH(R')O)_m\text{-}CH_2CH(R)\text{-}NH_2 \qquad (I)$$

dans laquelle R'' est un radical alkyloxy en $C_1$-$C_6$, de préférence $CH_3O$-, R et R' sont indifféremment H ou un radical alkyle en $C_1$-$C_6$ et n + m correspond à une masse moleculaire comprise entre 140 et 10.000, n ou m pouvant être nul.

Des exemples spécifiques et préférés de ce groupe sont la polyoxypropylènemonoamine et les copolymères blocs polyoxyethylène - polyoxypropylène monoamines, de préférence de formule

$CH_3O\text{-}(CH_2CH_2O)_n\text{-}(CH_2CH(CH_3)O)_m\text{-}CH_2CH(CH_3)NH_2$ (II)

où n est 1 à 40 et m est 2 à 40 avec de préférence m>n.

Des monoamines de ce type sont commercialisées par la société TEXACO CHEMICAL INC. sous la dénomination commerciale JEFFAMINE® M. series.

Un autre groupe utile de polyoxyalkylèneamines sont les diamines de formule (III).

$H_2N\text{-}CH(R)CH_2\ \text{-}(OCH(R')CH_2)_a\ \text{-}(OCH(R''')CH_2)_b\ \text{-}(OCH_2CH(R'))_c\ \text{-}NH_2$

où chaque R,R',R''' représente indifferemment H ou un radical alkyl en $C_1$-$C_6$ et a+b+c correspond à une masse moléculaire de 140 à 10.000.

Dans ce groupe de diamines sont également préférées les polyoxypropylènes diamines ($R=R'=R'''=CH_3$) où a+b+c est de préférence compris entre 5 et 70 et les polyoxyéthylène - polyoxypropylène blocs diamines (où dans la formule (III) R et R' sont $CH_3$ et R''' est H), contenant majoritairement de l'oxyde de propylène (a+c>b).

Appartiennent également au groupe des diamines, les composés de formule générale

$NH_2$ - A - NH - CO - NH - B - $NH_2$ (V)

où A et B sont des groupes polyéther en $C_2$-$C_8$ de préférence polyoxypropylène. Ces composés peuvent être obtenus par couplage d'une polyoxyalkylèneamine avec de l'urée.

Tous ces types de diamines sont commercialisés par la Société TEXACO CHEMICAL INC. sous la dénomination JEFFAMINE® D-series, ED-series et DU-series.

Parmi les triamines on peut citer les composés de formule

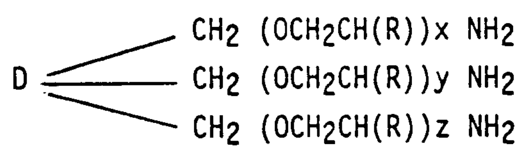

(VI)

où D est un reste hydrocarboné derivant d'un triol comme par exemple le glycerol ou le trimethylolpropane, R est H ou un radical alkyl en $C_1$-$C_6$ et x+y+z est compris entre 5 et 90. De préférence R est $CH_3$. Des triamines de ce type sont commercialisés sous la dénomination JEFFAMINE® T-series.

Les dispersions aqueuses de polymères sont de préférence des latex acryliques ou esters vinyliques qui sont dérivés de la copolymérisation radicalaire en milieu aqueux de monomères insaturés. Il est nécessaire que soit incorporé au polymère des unités monomères comportant au moins une fonction acide carboxylique. Des exemples d'acides carboxyliques sont l'acide acrylique, l'acide méthacrylique, l'acide fumarique, l'acide crotonique, l'acide itaconique, l'acide mésaconique, l'acide maléique, l'acide citraconique ainsi que les monoesters des acides dicarboxyliques avec les alcanols ayant de 1 à 4 atomes de carbone et leurs dérivés N-substitués. La quantité d'acide carboxylique est favorablement comprise entre 0,1 et 10%, de préférence 0,5 à 6% en poids du poids total des monomères copolymérisables.

Des exemples non limitatifs de monomères qui peuvent être copolymèrisés seuls ou en mélange comprennent : les esters de l'acide acrylique et de l'acide méthacrylique avec les alcanols en $C_1$ - $C_{18}$ de préférence $C_1$ - $C_8$ tels que l'acrylate de méthyle, l'acrylate d'éthyle, l'acrylate de propyle, l'acrylate de n-butyle, l'acrylate d'isobutyle, l'acrylate de 2-éthylhéxyle, le méthacrylate de méthyle, le méthacrylate d'éthyle, le méthacrylate de n-butyle, le méthacrylate d'isobutyle.

- les esters vinyliques d'acide carboxylique comme l'acetate de vinyle, le versatate de vinyle, la proprionate de vinyle, le butyrate de vinyle
- les composés vinylaromatiques comme le styrène, l'α méthylstyrène, le vinyltoluène, le monochlorostyrène, et similaires.

Ces monomères sont souvent copolymèrises avec d'autres monomères à insaturation éthylènique dans la préparation des latex destinés aux applications de revêtement. Ces autres monomères incluent non limitativement les composés dieniques tels que le butadiene-1,3, le 2-méthylbutadiene-1,3, le 2,4-diméthylbutadiene-1,3, le 2-chlorobutadiene 1,3 etc... ; les nitriles vinyliques ayant de 3 à 12 atomes de carbone, en particulier l'acrylonitrile et la méthacrylonitrile ; les ami des d'acides carboxyliques insaturés comme l'acrylamide, le methacrylamide ; les dialkylesters de diacides carboxyliques éthylèniques tels que les dialkylesters de l'acide fumarique, de l'acide maléique, de l'acide itaconique ; le chlorure de vinyle, et le chlorure de vinylidene.

D'autres monomères pouvant contenir des radicaux fonctionnels et servant à conférer des propriétés spécifiques ou à améliorer la stabilisation des particules peuvent également entrer dans la composition du copolymère. Comme exemple de tels radicaux fonctionnels, on peut notamment citer : des radicaux sulfate ou sulfonate sous le forme de sel ou d'acide non neutralisé, amido y compris amido substitué tel qu'alcoxy-alcoyl-amido- et alcoylol amido-, isocyanato-, ceto-, aldehyde, hydroxyl-,silane, uréido, oxazonidyl, oxazinyl ou acétoacétyl mais également une insaturation de type allyl, vinyl, (méth)acryl ou dicyclopentényl.

Des exemples non limitatifs de dispersions aqueuses de copolymère sont les latex préparés à partir de :

- 0-75 %, de préférence 10-60 % en poids de styrène
- 15-99,9 % en poids d'un ou plusieurs (méth)acrylate d'alkyle
- 0,1-10 % d'un ou plusieurs acide carboxylique ethyleniquement insaturé
- 0-30 % d'autres monomères copolymerisables

et les latex préparés à partir de :

- 10-99,9 % d'un ou plusieurs esters vinyliques d'acide carboxylique
- 0-89,9 % d'un ou plusieurs ((méth)acrylates d'alkyle
- 0,1-10 % d'un ou plusieurs acide carboxylique éthyleniquement insaturé
- 0-30 % d'autre monomères copolymerisables.

La Tg du polymère est ajustée en synthétisant des copolymères contenant des répartitions variables de monomères "durs" (Tg de l'homopolymère correspondant élevé) et "mou" (Tg de l'homopolymère correspondant basse), comme il est bien connu dans la technique.

La polymérisation est réalisée, de manière connue en soi, en une ou plusieurs étapes.

Toutes les techniques classiques de polymérisation en dispersion et en solution peuvent être utilisées. Selon l'invention, il est recommandé d'utiliser la technique bien connue de polymérisation en émulsion.

Ainsi, les monomères peuvent être préémulsionnés avec de l'eau en présence d'un agent émulsifiant anionique ou non ionique, dont on utilise habituellement environ de 0,01 à 10 %, calculés sur la base du poids de monomères totaux. Un initiateur de polymérisation du type générateur de radicaux libres, tel que du persulfate d'ammonium ou de potassium, peut être utilisé seul ou en combinaison avec un accélérateur, tel que du métabisulfite de sodium ou du thiosulfate de sodium, du formaldéhyde sulphoxylate de sodium ainsi que des ions métalliques (fer, cobalt cuivre...). Peuvent également être utilisés des générateurs de radicaux libres tels les azoiques (2,2' - azobisisobutyronitrile, 4,4' - azobis (4-cyanopentanoic acide)...) ou les peroxydes tel l'eau oxygénée ou l'hydroperoxyde de tertio-butyle ou de cumène en association avec un réducteur.

L'initiateur et l'accélérateur, constituant conjointement ce qui est habituellement dénommé catalyseur, sont utilisables à raison de 0,1 à 2 % chacun sur la base du poids de monomères à copolymériser. La température de polymérisation peut être comprise entre 30 °C et 100 °C, plus favorablement entre 50 °C et 90 °C.

Comme exemples d'agents émulsifiants, on peut notamment citer des sels de métal alcalin et d'ammonium d'alcoyl-, aryl-, alkylaryl et arylalkyl sulfonates et sulfates, ou de polyéther-sulfate ; les phosphates et phosphonates correspondants ; et des acides gras, esters, alcools, amines, ami des et alkylphénols éthoxylés.

En plus de l'émulsifiant, le système de polymérisation peut également contenir un colloïde protecteur hydrosoluble : des éthers, hydroxymethyl-, cellulosiques par exemple l'hydroxyméthyl, l'hydroxyéthyl ou l'hydroxypropyl cellulose ainsi que le carboxyméthyle cellulose de sodium, des alcools polyvinyliques partiellement ou totalement hydrolysés, des polyacides acryliques sous forme acide ou salifiés, une poly N-vinyl amide par exemple, la poly N-vinylpyrrolidone et la poly N-vinyl N-méthyl acétamide ainsi que le poly (méthyl vinyl éther/anhydride maléique). Il est souvent avantageux d'incorporer à la polymérisation des agents de transfert de chaine tels que les mercaptans ou les dérivés halogénés.

Pour certaines applications, il est également interessant de réticuler le polymère en cours de polymérisation si l'on désire diminuer la sensibilité du film à l'eau et au solvant ou augmenter ses propriétés mécaniques. Dans ce cas, on incorpore à la polymérisation des monomères ayant plusieurs insaturations éthyléniques en quantités allant de 0,1 à 10 %. Des exemples de tels monomères comprennent le di(méth)-acrylate d'éthylèneglycol, le diacrylate de tripropylèneglycol, le tri(méth)acrylate de triméthylolpropane, le (méth)acrylate d'allyle, le diallylmaléate, le triallylcyanurate, le divinylbenzène, le méthylène-bis acrylamide.

De manière connue, il est possible de polymériser un monomère ou une partie des monomères, dans une première étape, puis d'ajouter subsequemment les autres monomères de manière à former des particules hétérogènes. C'est ainsi qu'une partie ou la totalité des monomères à base d'acide carboxylique peut être ajoutée en continu ou par fractions après le départ de la polymérisation afin d'assurer qu'une quantité suffisante de groupes acides se situe à la surface des particules de polymère formées au cours de la polymérisation.

La teneur en matières sèches de la dispersion est généralement comprise entre 20 et 70 % de préférence 40-60 % en poids.

Après polymérisation, les latex carboxylés sont habituellement ajustés à un pH neutre ou basique à l'aide d'une ou plusieurs bases telles que les hydroxydes alcalins, l'ammoniaque ou des amines organiques hydrosolubles comme la 2-amino 2-methylpropanol, le diethylaminoéthanol ou encore des ammoniums quaternaires comme l'hydroxyde de tetrabutylammonium.

Selon l'invention, les polyoxyalkylèneamines sont utilisés en remplacement total ou partiel des agents neutralisants de l'art antérieur. Les quantités utilisables peuvent varier dans de larges limites en fonction de la masse moléculaire et de la fonctionnalité de la polyoxyalkylèneamine utilisée, du pH initial du latex et du pH souhaité de la formulation dans laquelle le latex est utilisé pour l'application visée.

Les polyoxyalkylèneamines ont pour effet, contrairement aux agents neutralisants classiques, d'abaisser la Tg du polymère ainsi que la TMFF de la dispersion. Cet effet est d'autant plus marqué que la quantité utilisée est importante. Pour une composition de polymère donnée, le choix de la polyoxyalkylèneamine la plus efficace, et sa quantité peuvent être déterminées par l'homme de métier de manière simple en mesurant l'abaissement de la TMFF du latex, eventuellement l'évolution de la Tg.

De manière générale, les quantités utilisables peuvent varier de 0,1 à 30 % en poids par rapport au poids du polymère dans la dispersion, plus spécifiquement de 0,5 à 10 %. En pratique, pour préparer la dispersion, l'addition est normalement effectuée dans le latex après polymérisation. Elle peut cependant être effectuée aussi dans le milieu dispersé au cours de la polymérisation. Il est encore possible d'ajouter la polyoxyalkyleneamine dans la formulation de revêtement contenant la dispersion.

La polyoxyalkylene amine peut être utilisée seule ou en complément d'un ou plusieurs agents basiques habituels tels que ceux indiqués précédemment. L'ordre d'addition est indifferent, les agents basiques peuvent ainsi être introduits avant et/ou après addition de la polyoxyalkyleneamine de manière à ajuster le pH à la valeur souhaitée. Pour une bonne réalisation de l'invention il est souhaitable que la polyoxyalkyleneamine soit au moins en partie fixée au polymère par liaison ionique avec les groupes acide carboxylique du polymère.

Les dispersions aqueuses contenant le polymère carboxylé et la polyoxyalkyleneamine peuvent être formulées en compositions de revêtement et en adhésifs.

Dans la pratique de l'invention, on peut preparer la composition de revêtement et les adhésifs en mélangeant la dispersion aqueuse contenant le copolymère carboxylé et la polyoxyalkylèneamine avec les charges, pigments, et autres additifs si nécessaire. En variante, il est possible de formuler la composition de revêtement en mélangeant ensemble la dispersion du copolymère de pH acide, la polyoxyalkylèneamine, les charges, pigments et additifs. Des exemples spécifiques de charges et pigments sont le kaolin, le talc, le sulfate de baryum, le dioxyde de titane, le carbonate de calcium, l'hydroxyde d'aluminium, l'oxyde de zinc, et similaires. D'autres additifs, habituellement utilisés comprennent des liants naturels tels qu'amidon, caséine, des agents dispersants, agents épaississants, agents anti-mousse, agents stabilisants, biocides et autres. Les compositions peuvent être utilisées comme peinture extérieure ou intérieure, lasure, revêtement souple d'étanchéification et d'imperméabilisation, enduits, adhésifs pour ceramiques et revêtement de sol, mastic, couchage du papier et autres.

L'invention est illustrée par les exemples suivants. Toutes les parties et pourcentages sont exprimés en poids, sauf indication contraire.

Les mesures de viscosité sont effectuées à l'aide d'un viscosimètre BROOKFIELD RVT à 50t/min et 23 ° C.

<u>Exemple 1</u> :

Cet exemple illustre l'influence de l'addition de diverses polyoxyalkylènemonoamines et -diamines sur la viscosité et la TMFF de la dispersion polymère.

Un mélange consistant en une pré-émulsion aqueuse de monomères styrene, acrylate de butyle, acide acrylique (rapport en poids 47,3/48/4,7) est polymérisé à 85 ° C avec 0,5 % d'un emulsifiant anionique et, comme catalyseur 0,4 % d'hydroperoxyde de t. butyle et 0,4 % de formaldehyde sulfoxylate.

Après polymérisation la dispersion est refroidie à 20 °C. La dispersion obtenue a une teneur en matière sèche de Γ 50 % et un pH = 2 qui est porté à pH = 6,15 en utilisant l'ammoniaque.

Sur des parties aliquotes (A à A11) la dispersion est ensuite amenée à pH = 8 en ajoutant, sous agitation, la quantité nécessaire d'ammoniaque (essai A témoin) ou une polyoxyalkylèneamine en quantités variables. Si nécessaire, le pH est ajusté par addition complémentaire d'ammoniaque ou d'amido-2 méthyl-2 propanol-1 (AMP) de manière à obtenir dans chaque cas un pH final égal à 8.

L'amine est ajoutée en solution aqueuse à 50 % ou pure lorsqu'elle est insoluble dans l'eau.

Polyoxyalkylèneamines utilisés

Poly(oxyéthylène - oxypropylène) monoamines :

| | |
|---|---|
| JEFFAMINE® M 600 | Rapport molaire OP/OE 9/1<br>PM approximatif 600 |
| JEFFAMINE® M 1000 | Rapport molaire PO/EO 3/19<br>PM approximatif 1000 |
| JEFFAMINE® M 2005 | Rapport molaire PO/EO 32/3<br>PM approximatif 2000 |
| Polyoxypropylènediamine : | |
| JEFFAMINE® D 400 | $H_2NCH(CH_3)CH_2$-$[OCH_2CH(CH_3)]_x$-$NH_2$<br>x = 5-6<br>PM approximatif 400 |
| Polyoxypropylènediamine modifié : | |
| JEFFAMINE® DU 700 | $H_2NCH(CH_3)CH_2$-$[OCH_2CH(CH_3]_n$-NH-CO-NH-$[CH(CH_3)CH_2O]_n$ - $CH_2CH(CH_3)NH_2$<br>n = 5,6 - PM approximatif 820 |

Les propriétés des latex obtenus sont répertoriées dans le Tableau 1.

TABLEAU 1

| Réactifs* | A | A1 | A2 | A3 | A4 | A5 | A6 | A7 | A8 | A9 | A10 | A11 |
|---|---|---|---|---|---|---|---|---|---|---|---|---|
| Latex | 100 | 100 | 100 | 100 | 100 | 100 | 100 | 100 | 100 | 100 | 100 | 100 |
| $NH_4OH$ (100 %) | 0,3 | | | | | | 0,16 | 0,32 | | | | |
| Aminomethylpropanol | | 1,6 | | 0,8 | 1 | 1,25 | | | | | | 0,16 |
| JEFFAMINE® M 600 | | | 11,9 | 7,5 | 4,5 | 2,5 | 8 | | | | | |
| JEFFAMINE® M 1000 | | | | | | | | | 16,5 | | | |
| JEFFAMINE® M 2005 | | | | | | | | 8 | | | | |
| JEFFAMINE® D 400 | | | | | | | | | | 4 | | |
| JEFFAMINE® DU 700 | | | | | | | | | | | 8,6 | 7,5 |
| Propriété du latex | | | | | | | | | | | | |
| extrait sec % | 50 | 50 | 46 | 47,5 | 47,7 | 47,7 | 48,4 | 47,8 | 50 | 50 | 46 | 46,7 |
| viscosité mPa.s | 4500 | 8100 | 10400 | 13800 | 10900 | 6500 | 15000 | 6800 | 2360 | 13000 | 8660 | 10600 |
| TMFF °C | 24,5 | 24 | 15,5 | 17 | 20 | 21,5 | 17,5 | 20,5 | 22 | 23,5 | 21 | 21,5 |
| Tg °C | 20 | | 0 | | | | | | | | | |

* parties en matières sèches

Exemple 2 :

On prépare par polymérisation en émulsion aqueuse a 85 °C en présence de 0,5 % de persulfate d'ammonium et 0,5 % d'émulsifiant anionique un latex styrène/acrylate de butyle/ acide acrylique (Rapport en poids 36,7/60/3,3) ayant un extrait sec de 50 %.

Sur des parties aliquotes ce latex est neutralisé soit en totalité avec l'hydroxyde de sodium ou l'ammoniaque (latex temoins - Tg 1-2 °C), soit avec une JEFFAMINE® M 600 ou M 2005 en quantités variables et en complément avec l'hydroxyde de sodium ou l'ammoniaque de manière à ajuster le pH à la

valeur indiquée dans le tableau 2.

A l'aide des dispersions obtenues on prépare des compositions de peinture de formulation suivante :

| | | parties en poids |
|---|---|---|
| Eau | | Y |
| Latex | | X |
| Epaississant : Tylose MH 6000 X P (Hoechst) | | 19,4 |
| Epaississant COATEX P 90 | | 0,3 |
| Biocide PROXEL GLX (ICI) | | 0,15 |
| Antimousse NOPCO 8034 (Henkel Nopco) | | 0,12 |
| Oxyde de titane = RL68 (Thann & Mulhouse) | | 5,3 |
| Carbonate de calcium : | DURCAL 5 (OMYA) | 32,0 |
| | OMYALITE 90 (OMYA) | 21,3 |

Les valeurs X et Y varient pour avoir une concentration pigmentaire en volume (CPV) comprise entre 70 et 80 % selon les indications suivantes :

| | | |
|---|---|---|
| CPV 70 % | X = 19,3 | Y = 11 |
| CPV 75 % | X = 15 | Y = 11,9 |
| CPV 80 % | X = 11,3 | Y = 12,7 |

La viscosité des peintures contenant le latex modifié à la JEFFAMINE est comparable à celle des latex temoins B et B3.

La stabilité au stockage accéléré est mesurée par le rapport entre la viscosité BROOKFIELD après 30 jours de stockage à 55 °C et la viscosité BROOKFIELD initiale. Elle est excellente.

Enfin, la résistance à l'abrasion humide (RAH) est mesurée suivant le norme DIN 53778 après 28 jours de séchage à température ambiante.

Les caractéristiques des peintures sont répertoriées dans le Tableau 3.

<u>Exemple 3</u> :

On prépare par polymérisation en émulsion aqueuse un latex carboxylé méthacrylate de méthyle/acrylate de butyle/acide acrylique (Rapport en poids 36,7/60/3,3) avec un contenu en matière sèches de Γ 50 % et un pH = 2.

Sur des parties aliquotes, le latex est amené à pH = 7,5 - 7,6 en utilisant soit l'hydroxyde de sodium (latex temoin C) soit une JEFFAMINE® et de l'hydroxyde de sodium en complément pour ajuster le pH à la valeur finale.

Les dispersions obtenues ont été ajoutées dans la formulation de peinture donnée dans l'exemple 2 et testées.

<u>Exemple 4</u> :

On utilise un latex carboxylé méthacrylate de méthyle/acrylate de butyle/acide acrylique (41,7/55/3,3) ayant une teneur en matières sèches de Γ 50 % et un pH = 2.

Sur des parties aliquotes, le latex est amené à pH = 7,5-7,6 par addition soit d'hydroxyde de sodium (latex temoin D) soit de JEFFAMINE® M 600 en quantité de 4 % et 6 % et d'hydroxyde de sodium.

Les dispersions obtenues ont été testées dans les formulations de peinture comme dans l'exemple 2.

<u>Exemple 5</u> :

On utilise un latex préparé par polymérisation en émulsion aqueuse de monomères styrene, acrylate de butyle, acrylate de 2-ethylhexyle, acide acrylique acide fumarique (38/52/6/2/2). Contenu en matière sèches

du latex Γ 50 %.

Sur des parties aliquotes, le latex est amené à pH = 7,5-7,6 par addition soit d'hydroxyde de sodium (latex temoin E) soit de JEFFAMINE® M 600 en quantité de 6 % et d'hydroxyde de sodium.

Les dispersions obtenues ont été testées dans les formulations de peinture décrites à l'exemple 2.

Les caractéristiques des dispersions et celles des peintures obtenues selon les exemples 3 à 5 sont répertoriées dans les tableaux 4 et 5.

TABLEAU 2

| LATEX | NEUTRALISANT | | CARACTERISTIQUES DES LATEX | | | | |
|---|---|---|---|---|---|---|---|
| | X | Y (% sec) | extrait sec % | viscosité mPas | pH | Tg °C | TMFF °C |
| B | NaOH | | 50 | 460 | 8 | 1 | 2,5 |
| B1 | NaOH | 8,40 % JEFFAMINE® M 600 | 49,15 | 1840 | 8 | -8 | <0 |
| B2 | NaOH | 8,40 % JEFFAMINE® M 2005 | 49,25 | 1500 | 8 | -10 | <0 |
| B3 | NH4OH | | 49,8 | 516 | 8 | 2 | 2,5 |
| B4 | NH4OH | 2,50 % JEFFAMINE® M 600 | 49,8 | 466 | 8 | -2 | 0,5 |
| B5 | NH4OH | 5,00 % JEFFAMINE® M 600 | 49,8 | 496 | 8 | -5 | <0 |

TABLEAU 3

| CPV | LATEX | CARACTERISTIQUES DES PEINTURES | | | |
|---|---|---|---|---|---|
| | | pH | viscosité m Pas | stabilité stockage 30j/55 °C | RAH nbre cycles |
| 70% | B | 8,7 | 4120 | 1,1 | 1870 |
| | B1 | 8,6 | 4040 | 1 | 7050 |
| | B2 | 8,6 | 4040 | 1 | 4480 |
| | B3 | 8,5 | 4120 | - | 1930 |
| | B4 | 8,5 | 3960 | - | 2430 |
| | B5 | 8,5 | 3920 | - | 5370 |
| 80% | B | 8,6 | 3800 | 1 | 460 |
| | B1 | 8,6 | 3760 | 1 | 1100 |
| | B2 | 8,6 | 3760 | 1 | 930 |

TABLEAU 4

| REFERENCE LATEX | NEUTRALISANT | | CARACTERISTIQUES DES LATEX | | | | |
|---|---|---|---|---|---|---|---|
| | X | Y (% sec) | EXTRAIT SEC % | VISCOSITE mPas | pH | Tg °C | TMFF °C |
| C | NaOH | | 50,2 | 310 | 7,6 | 0 | <0 |
| C1 | NaOH | 3,00 % JEFFAMINE M 600 | 49,8 | 292 | 7,6 | | <0 |
| C2 | NaOH | 6,00 % JEFFAMINE M 600 | 49,9 | 380 | 7,5 | | <0 |
| C3 | NaOH | 6,00 % JEFFAMINE M 2005 | 49,6 | 460 | 7,6 | | <0 |
| D | NaOH | | 50 | 232 | 7,5 | 10 | 7,5 |
| D1 | NaOH | 4,00 % JEFFAMINE M 600 | 49,5 | 276 | 7,5 | | 6 |
| D2 | NaOH | 8,00 % JEFFAMINE M 600 | 49,8 | 592 | 7,9 | | 2,5 |
| E | NaOH | | 50,1 | 1260 | 7,5 | -6 | <0 |
| E1 | NaOH | 6,00 % JEFFAMINE M 600 | 49,8 | 1000 | 7,6 | | <0 |

TABLEAU 5

| CPV | LATEX | CARACTERISTIQUES DES PEINTURES | | |
|---|---|---|---|---|
| | | pH | viscosité mPas | RAH nombre cycles |
| 70 % | C | 8,5 | 4040 | 1820 |
| | C1 | 8,5 | 4280 | 3260 |
| | C2 | 8,6 | 4160 | 5880 |
| | C3 | 8,6 | 4240 | 5180 |
| 75 % | C | 8,5 | 3960 | 710 |
| | C1 | 8,6 | 4080 | 1210 |
| | C2 | 8,5 | 3800 | 1660 |
| | C3 | 8,6 | 3920 | 1570 |
| 70 % | D | 8,5 | 4700 | 1190 |
| | D1 | 8,5 | 4600 | 3910 |
| | D2 | 8,5 | 5000 | 6800 |
| 75 % | D | 8,5 | 4200 | 820 |
| | D1 | 8,5 | 4600 | 1440 |
| | D2 | 8,5 | 4500 | 2580 |
| 70 % | E | 8,5 | 4640 | 1800 |
| | E1 | 8,5 | 4400 | >10000 |
| 75 % | E | 8,5 | 3920 | 1080 |
| | E1 | 8,5 | 3840 | 2480 |

Exemple 6 :

On utilise un latex styrène/acrylate de butyle/acide acrylique (19,4/77,6/3).

Le latex est neutralisé en utilisant soit l'ammoniaque (latex temoin F) soit 4,5 % de JEFFAMINE® M 600 et l'ammoniaque de manière à amener le pH à 7,4-7,8.

Les dispersions obtenues sont introduites dans une formulation pour revêtement enduit semi-épais d'imperméabilisation, de composition suivante :

| | |
|---|---|
| Latex (Extrait sec 50 %) | 62,26 |
| dispersant COATEX P 90 (cortex) | 0,17 |
| antimousse NOPCO 8034 (Heukel Nopco) | 0,12 |
| épaississant acrylique VISCOATEX 46 (Coatex) | 0,54 |
| Ammoniaque (20 %) | 0,17 |
| Biocide PROXEL XL2 (ICI) | 0,12 |
| Propyleneglycol | 1,00 |
| oxyde de titane RL68 (Thann et Mulhouse) | 5,06 |
| Carbonate de calcium DURCAL 10 (omya) | 23,15 |
| Epaississant COATEX BR 100 (10 %) | 2,53 |
| Eau | 4,84 |

A partir des dispersions brutes et des enduits formulés on réalise des films sur lesquels on détermine l'allongement relatif à la rupture à l'aide d'un dynamomètre à vitesse imposée = 50mm/min à -10°C et 23°C.

Le film est obtenu par coulée dans un moule en élastomère siliconé -Epaisseur du film humide 2mm- Epaisseur du film sèché 0,5 mm (23°C-humidité relative 50 %- 7 jours). Les mesures d'allongement sont faites sur des éprouvettes de forme haltère 20 X 4 mm modèle H3 découpées dans le film. On indique la moyenne d'allongement à la rupture (%) ainsi que l'écart type obtenu à partir de 10 mesures.

| CARACTERISTIQUES DU LATEX | F $NH_4OH$ | F1 $NH_4OH$ + JEFFAMINE® M 600 |
|---|---|---|
| Extrait sec % | 50 | 50 |
| Viscosité (mPas) | 1000 | 3740 |
| pH | 7,8 | 7,4 |
| Tg °C | -21 | -26 |
| TMFF | <0 | <0 |
| CARACTERISTIQUES DU FILM NON FORMULE | | |
| Allongement rupture (%) | | |
| - 10 °C | 508 ± 21 | 761 ± 54 |
| 23 °C | 620 ± 39 | 882 ± 27 |
| CARACTERISTIQUES DE L'ENDUIT | | |
| pH | 8,5 | 8,5 |
| Viscosité (mPas) | 4640 | 4400 |
| Allongement rupture % | | |
| - 10°C | 151 ± 10 | 223 ± 20 |

Exemple 7

On utilise un latex styrène/acrylate de butyle/acide acrylique (52,5/41,5/6).

Le latex est neutralisé en utilisant 3 % de JEFFAMINE® M 600 et de l'ammoniaque en quantité nécessaire pour ajuster le pH à 8. Le latex temoin G est neutralisé en totalité par l'ammoniaque.

Les deux dispersions sont formulées pour application adhésif de carreaux en céramique.

| | |
|---|---|
| Latex (extrait sec 50 %) | 14 |
| ether cellulosique METHOCEL J75 MS (DOW) | 0,25 |
| dispersant COATEX P 90 | 0,60 |
| Butylglycol | 1,40 |
| White Spirit | 1,40 |
| antimousse NOPCO 8034 | 0,12 |
| Biocide PROXEL XL2 (ICI) | 0,20 |
| craie E.V. (omya) | 25 |
| silice S1 (silice et Kaolin) | 49 |
| ammoniaque qsp pH = 9 | |
| Eau | 7,90 |

Les adhésifs sont testés suivant le Directive UEAtc pour l'Agrément des colles pour revêtements céramiques (juillet 1979). Conditions opératoires = malaxage 30 mm à 80t/min Mesure de la viscosité = après 24 heures de repos - BROOKFIELD RVT broche n° 7-23° C-50t/min
Carreaux faïence 5 X 5 cm - support beton
Pâte étalée à l'aide d'une spatule dentelée 6 X 6 X 6 mm à dents carrées.

| CARACTERISTIQUES DU LATEX | G $NH_4OH$ | G1 $NH_4OH$ + JEFFAMINE® M 600 |
|---|---|---|
| Extrait sec % | 50,3 | 50,3 |
| Viscosité mPas | 630 | 790 |
| pH | 8 | 8 |
| TMFF | 34 | 32 |
| Tg | 32 | |
| CARACTERISTIQUES DE LA COLLE | | |
| PH | 8,2 | 8,1 |
| Viscosité mPas | 72800 | 80000 |
| Force d'arrachage daN/cm$^2$ | | |
| 7j.sec | 17 | 21 |
| 7j.sec + 7j. humide | 3,8 | 4,1 |
| 28j.sec | 29 | 29 |
| 28j.sec + 1j. humide | 7,6 | 8,2 |

## Revendications

1. Dispersions aqueuses de polymères à base de monomères éthylèniques insaturés caractérisées en ce que le polymère renferme des unités monomères contenant des groupes acide carboxylique et en ce qu'elles contiennent une polyoxyalkylèneamine, comportant par molécule, au moins une fonction amine primaire et/ou secondaire.

2. Dispersions selon la revendication 1 caractérisées en ce que le polymère est préparé à partir d'un mélange de monomères comprenant au moins un ester alkylique de l'acide acrylique ou méthacrylique et/ou un ester vinylique d'acide carboxylique et/ou un monomère vinyl aromatique et au moins un acide carboxylique à insaturation éthylénique.

3. Dispersions selon l'une des revendications 1 ou 2 caractérisées en ce que la quantité d'acide carboxylique à insaturation ethylenique est comprise entre 0,1 et 10 % en poids basée sur le poids total des monomères copolymérisables.

4. Dispersions aqueuses selon l'une des revendications 1 à 3 caractérisées en ce que la quantité de polyoxyalkylèneamine est comprise entre 0,1 et 30 % en poids, de préférence 0,5 et 10 %, par rapport au poids du polymère.

5. Dispersions aqueuses selon l'une des revendications 1 à 4 caractérisées en ce que la masse moléculaire de la polyoxyalkylèneamine est comprise entre 140 et 10.000, de préférence entre 400 et 4000.

6. Dispersion selon l'une des revendications 1 à 5 caractérisées en ce que la polyoxyalkyleneamine est une monoamine primaire.

7. Dispersions selon l'une des revendications 1 à 5 caractérisées en ce que la polyoxyalkylèneamine est une diamine primaire.

8. Dispersions selon l'une des revendications 1 à 5 caractérisées en ce que la polyoxyalkylèneamine est une triamine primaire.

9. Dispersions selon l'une des revendications 6 à 8 caractérisées en ce que le groupe polyoxyalkylène est polyoxypropylène.

10. Dispersions selon l'une des revendications 6 ou 7 caractérisées en ce que le groupe polyoxyalkylène est un copolymère bloc polyoxyéthylène-polyoxypropylène.

11. Dispersions selon la revendication 10 caractérisées en ce que le rapport entre le nombre d'unités oxyde de propylène/oxyde d'éthylène est supérieur à 1.

12. Dispersions aqueuses selon l'une quelconque des revendications précédentes, caractérisées en ce que les polymères sont polymérisés en solution et en ce que les dispersions sont neutralisées en totalité ou en partie par la polyoxyalkylèneamine.

13. Composition de revêtement et adhésifs comprenant des charges, pigments et additifs conventionnels caractérisée en ce qu'elle contient une dispersion aqueuse selon l'une quelconque des revendications 1 à 12 comme liant.

14. Revêtements et adhésifs obtenus avec la composition selon la revendication 13.

**Claims**

1. Aqueous dispersions of polymers based on unsaturated ethylenic monomers, characterized in that the polymer includes monomer units containing carboxylic acid groups and in that they contain a polyoxyalkyleneamine including at least one primary and/or secondary amine functional group per molecule.

2. Dispersions according to Claim 1, characterized in that the polymer is prepared from a mixture of monomers comprising at least one alkyl ester of acrylic or methacrylic acid and/or a vinyl ester of a carboxylic acid and/or a vinyl aromatic monomer and at least one carboxylic acid containing ethylenic unsaturation.

3. Dispersions according to either of Claims 1 and 2, characterized in that the quantity of carboxylic acid containing ethylenic unsaturation is between 0.1 and 10 % by weight, based on the total weight of the copolymerizable monomers.

4. Aqueous dispersions according to one of Claims 1 to 3, characterized in that the quantity of polyoxyalkyleneamine is between 0.1 and 30 % by weight, preferably 0.5 and 10 %, relative to the weight of the polymer.

5. Aqueous dispersions according to one of Claims 1 to 4, characterized in that the molecular mass of the polyoxyalkyleneamine is between 140 and 10,000, preferably between 400 and 4000.

6. Dispersion according to one of Claims 1 to 5, characterized in that the polyoxyalkyleneamine is a primary monoamine.

7. Dispersions according to one of Claims 1 to 5, characterized in that the polyoxyalkyleneamine is a primary diamine.

8. Dispersions according to one of Claims 1 to 5, characterized in that the polyoxyalkyleneamine is a primary triamine.

9. Dispersions according to one of Claims 6 to 8, characterized in that the polyoxyalkylene group is polyoxypropylene.

10. Dispersions according to either of Claims 6 and 7, characterized in that the polyoxyalkylene group is a polyoxyethylene/polyoxypropylene block copolymer.

11. Dispersions according to Claim 10, characterized in that the ratio of the number of propylene oxide units to ethylene oxide units is greater than 1.

12. Aqueous dispersions according to any one of the preceding claims, characterized in that the polymers are polymerized in solution and in that the dispersions are wholly or partially neutralized using the polyoxyalkyleneamine.

13. Coating and adhesive composition comprising conventional fillers, pigments and additives, characterized in that it contains an aqueous dispersion according to one of Claims 1 to 12 as a binder.

14. Coatings and adhesives obtained with the composition according to Claim 13.

## Patentansprüche

1. Wäßrige Polymerdispersionen auf Basis von ethylenisch ungesättigten Monomeren, dadurch gekennzeichnet, daß das Polymer Monomereinheiten mit Carbonsäuregruppen enthält und daß sie ein Polyoxyalkylenamin enthalten, welches pro Molekül wenigstens einen primären und/oder sekundären Aminrest aufweist.

2. Dispersionen nach Anspruch 1, dadurch gekennzeichnet, daß das Polymer aus einer Monomerenmischung hergestellt wird, die wenigstens einen Alkylester der Acryl- oder Methacrylsäure und/oder einen Vinylester einer Carbonsäure und/oder ein aromatisches Vinylmonomer und wenigstens eine ethylenisch ungesättigte Carbonsäure enthält.

3. Dispersionen nach Anspruch 1 oder 2, dadurch gekennzeichnet, daß die Menge der ethylenisch ungesättigten Carbonsäure zwischen 0,1 und 10 Gew.-%, bezogen auf das Gesamtgewicht der copolymerisierbaren Monomeren, liegt.

4. Wäßrige Dispersionen nach einem der Ansprüche 1 bis 3, dadurch gekennzeichnet, daß die Menge des Polyoxyalkylenamins zwischen 0,1 und 30 Gew.-%, vorzugsweise zwischen 0,5 und 10 Gew.-%, bezogen auf das Gewicht des Polymeren, liegt.

5. Wäßrige Dispersionen nach einen, der Ansprüche 1 bis 4, dadurch gekennzeichnet, daß die Molekularmasse des Polyoxyalkylenamins zwischen 140 und 10.000, vorzugsweise zwischen 400 und 4.000 liegt.

6. Dispersionen nach einem der Ansprüche 1 bis 5, dadurch gekennzeichnet, daß das Polyoxyalkylenamin ein primäres Monoamin ist.

7. Dispersionen nach einem der Ansprüche 1 bis 5, dadurch gekennzeichnet, daß das Polyoxyalkylenamin ein primäres Diamin ist.

8. Dispersionen nach einem der Ansprüche 1 bis 5, dadurch gekennzeichnet, daß das Polyoxyalkylenamin ein primäres Triamin ist.

9. Dispersionen nach einem der Ansprüche 6 bis 8, dadurch gekennzeichnet, daß die Polyoxyalkylengruppe eine Polyoxypropylengruppe ist.

**10.** Dispersionen nach Anspruch 6 oder 7, dadurch gekennzeichnet, daß die Polyoxyalkylengruppe ein Polyoxyethylen/Polyoxypropylen-Blockcopolymer ist.

**11.** Dispersionen nach Anspruch 10, dadurch gekennzeichnet, daß das Verhältnis zwischen der Anzahl von Propylenoxideinheiten und Ethylenoxideinheiten größer 1 ist.

**12.** Wäßrige Dispersionen nach einem der vorhergehenden Ansprüche, dadurch gekennzeichnet, daß die Polymere in Lösung polymerisiert werden und daß die Dispersionen ganz oder teilweise durch das Polyoxyalkylenamin neutralisiert werden.

**13.** Beschichtungs- und Haftmittelzusammensetzung, enthaltend Füllstoffe, Pigmente und herkömmliche Zusätze, dadurch gekennzeichnet, daß sie eine wäßrige Dispersion nach einem der Ansprüche 1 bis 12 als Bindemittel enthält.

**14.** Beschichtungen und Haftmittel, erhalten mit der Zusammensetzung nach Anspruch 13.